# EUROPÄISCHE PATENTSCHRIFT

(11) **EP 1 004 809 B1**
(45) Veröffentlichungstag und Bekanntmachung des Hinweises auf die Patenterteilung: **19.03.2003**
(21) Anmeldenummer: 99122189.6
(22) Anmeldetag: 06.11.1999
(51) Int. Cl.: F16L 37/00

(54) **Kupplung zum Verbinden vakuumisolierter Leitungsenden**
Connection for vacuum insulated conduit ends
Raccord pour la connexion de tuyaux calorifugés à vide

(30) Priorität: 25.11.1998 DE 19854346
(43) Veröffentlichungstag der Anmeldung: 31.05.2000
(73) Patentinhaber: Messer Griesheim GmbH, 65933 Frankfurt am Main (DE)
(72) Erfinder: Henneborn, Roland, 50259 Pulheim (DE)

(56) Entgegenhaltungen:
- DE-A- 4 405 687
- US-A- 3 865 409
- US-A- 4 889 149

## Beschreibung

Die Erfindung betrifft eine Kupplung zum Verbinden vakuumisolierter Leitungsenden mit einer Kupplungsdose, einem Kupplungsstecker und einer Verriegelungsvorrichtung, wobei die Kupplungsdose und der Kupplungsstecker zum Führen eines kryogenen Mediums vorgesehen sind. Aus der DE 195 16 029 C1, der DE 40 41 337 A1 und der DE 43 39 676 A1 sind Kupplungen für kryogene Medien bekannt, die einen Kupplungsstecker und eine Kupplungsdose aufweisen. Der Kupplungsstecker wird in die Kupplungsdose eingesteckt, so daß sich die vakuumisolierten äußeren Kupplungsgehäuse überlappen und ein außen am Kupplungsgehäuse angeordnetes Verbindungsstück mit einem an der Kupplungsdose vorgesehenen Gegenstück in Eingriff gebracht werden kann. Die Verbindung wird durch Verschrauben des Kupplungssteckers mit der Kupplungsdose hergestellt. Während des dabei ausgeführten Verschiebevorganges des Kupplungssteckers in die Kupplungsdose wird die Kupplung zuerst gegen Umgebungsmedium abgedichtet und anschließend die die Leitungsenden verschließenden Mittel geöffnet. Diese die Leitungsenden verschließenden Mittel dienen im ungekuppelten Zustand des Kupplungssteckers und der Kupplungsdose dazu, diese dicht zu verschließen.

Die formschlüssigen Schraubverbindungen der bekannten Kupplungen zum Verbinden vakuumisolierter Leitungsenden und zum Öffnen der ventilartigen, die Leitungsenden verschließenden Mittel stellen unter mechanischer und sicherheitstechnischer Betrachtung keine brauchbare Lösung dar, weil z.B. der mechanische und elektrische Aufwand bei der in der DE 40 41 337 A1 vorgeschlagenen automatischen Drehung der Überwurfmutter sehr groß ist und zu einer von Nichtfachleuten nicht mehr handhabbaren Ausbildung bezüglich der Größe und des Gewichts der Kupplung führt. Aber auch der in der DE 195 16 029 C1 offenbarte Hinweis beim Zusammenstecken und Verbinden des Kupplungssteckers mit der Kupplungsdose die Kraftaufbringung mittels Hebel, Exzenter oder mit Fremdmedium betriebenem Zylinder vorzunehmen, beschreitet nur den vom vorstehend bekannten Stand der Technik aufgezeigten Weg, nämlich, die Kupplungsgehäuse über eine Relativbewegung miteinander zu verbinden. Die Einsteck-/ Einschiebeverbindung ist sicherheitstechnisch unbefriedigend, wenn die Kupplungsdose als Betankungseinrichtung (Tankverschluß) am Fahrzeug und der Kupplungsstecker an einer Zapfsäule einer Tankstelle angeordnet ist, da die Einsteckverbindung beim Wegfahren in verbundenem Zustand zu schweren Schäden an der Tankstelle und/oder dem Fahrzeug führen kann, auch wenn der Kupplungsstecker von der Kupplungsdose in der Trennebene, d.h. der Ebene, in der sich die äußeren Stirnseiten von Kupplungsstecker und Kupplungsdose unmittelbar gegenüberliegen, gelöst ist, und der Kupplungsstecker zur Kupplungsdose in der Kupplungsebene, d.h. der Ebene, in der sich die die Leitungsenden verschließenden Mittel unmittelbar gegenüberliegen, angeordnet ist. Hinzu kommt, daß bei der Betankung von Kryokraftstoffbehältern von Fahrzeugen eine Bedienung der Kupplung durch Nichtfachleute erfolgt, was eine einfache und sichere Ausbildung der Kupplung erfordert, damit die Bediener nicht mit dem tiefkalten Kryokraftstoff in Verbindung kommen.

Aus den nachveröffentlichten 197 27 652.0-24 und 197 27 655.5-24 ist eine Kupplungsverbindung vakuumisolierter Leitungsenden bekannt, bei der die Trennebene und die Kupplungsebene nahezu in einer gemeinsamen Ebene liegen, was insbesondere im Hinblick auf die Sicherheit bei der Bedienung und bei Bedienfehlern und auf eine definierte Fernsteuerung der die Leitungsenden verschließenden, ventilartigen Mittel von Vorteil ist. Bei dieser Kupplung wird der Kupplungsstecker mit der Kupplungsdose über ein Verriegelungselement verbunden, das sich an dem Kupplungsstecker abstützt (Festlager) und die Kupplungsdose gegen die Kupplungsflächen mit den Dichtungen zieht. Hierzu weist die Kupplungsdose an ihrem Umfang einen Flansch auf, der von einem halbschalenförmigen Verriegelungselement der Verriegelungsvorrichtung hintergriffen wird und über ein Gestänge zur Kupplungssteckerseite gezogen wird. Dabei legen sich die Dichtungen dichtend an die Kupplungsflächen von Kupplungsstecker und Kupplungsdose. Als Spannelement für die Verriegelungsvorrichtung ist auf dem vakuumisolierten Kupplungsstecker ein Umlegehebel vorgesehen, der um eine Achse drehbar gelagert ist und an dem ein Gestänge außerhalb dieser Achse schwenkbar gelagert ist. Dieses Gestänge ist wiederum mit dem halbschalenförmigen Verriegelungselement verbunden, so daß über den Umlegehebel die benötigte mechanische Kraft aufgebracht wird, die das Vakuum der Kupplungsdose gegen die mit Dichtungen versehenen Kupplungsstecker zieht.

Diese aus den 197 27 652.0-24 und 197 27 655.5-24 bekannte Kupplung ist dahingehend problematisch, daß ihre Bedienung nicht hinreichend komfortabel ist und darüber hinaus nicht oder nur unter großem Aufwand automatisiert betätigbar ist.

Aus der als nächstliegenden Stand der Technik zu bewertenden US-A-4 889 149 ist eine Kupplung mit einer Kupplungsdose, einem Kupplungsstecker und einer Verriegelungsvorrichtung bekannt. Die Verriegelungsvorrichtung der Kupplung weist ein pneumatisch betätigtes, in axialer Richtung wirkendes Spannelement und pneumatisch betätigte Verriegelungselemente auf. Die in der Kupplungsdose und dem Kupplungsstecker angeordneten Verschlußmittel sind pneumatisch betätigbar.

Ausgehend von dem zuvor beschriebenen Stand der Technik liegt der Erfindung die Aufgabe zugrunde, eine Kupplung zur Verfügung zu stellen, die ein schnelles Verbinden und Trennen von zwei vakuumisolierten Leitungsenden weitgehend automatisiert ermöglicht.

Die zuvor hergeleitete und aufgezeigte Aufgabe ist gemäß der Erfindung durch eine Kupplung mit den Merkmalen von Anspruch 1 gelöst.

Erfindungsgemäß wird also die zur dichten Verbindung der Kupplungsflächen von Kupplungsstecker und Kupplungsdose benötigte nicht unerhebliche Kraft über ein pneumatisches Spannelement aufgebracht. Hierdurch wird die Bedienung der erfindungsgemäßen Kupplung zum einen komfortabler, da lediglich geringe Kräfte zum Einrasten der Verriegelungselemente von einer Bedienungsperson aufgebracht werden müssen und andererseits ist der gesamte Kupplungsvorgang mit der erfindungsgemäß ausgestalteten Kupplung ohne weiteres automatisierbar, da es nicht notwendig ist, beispielsweise einen Umlegehebel zu betätigen oder eine Schraubverbindung zwischen Kupplungsstecker und Kupplungsdose herzustellen. Darüber hinaus ist die mit der erfindungsgemäßen Kupplung hergestellte Verbindung sicher, da über das pneumatische Spannelement ohne weiteres Kräfte aufgebracht werden können, die zu einer sicheren Abdichtung zwischen Kupplungsdose und Kupplungsstecker ausreichen.

Erfindungsgemäß wird der Kuppelvorgang weiter vereinfacht, da lediglich die Stirnseiten von Kupplungsstecker und Kupplungsdose von einer Bedienungsperson zur Anlage gebracht werden müssen, woraufhin pneumatisch eine Verriegelung durch die Verriegelungselemente erfolgt und anschließend das Spannelement pneumatisch betätigt wird. Dieser hohe Komfort bei der Verbindung vakuumisolierter Leitungsenden mit der erfindungsgemäß ausgestalteten Kupplung sorgt für eine hohe Bedienerakzeptanz, was insbesondere im Bereich der Kupplung von Kryokraftstoff führenden Leitungen an einer Tankstelle von wesentlicher Bedeutung ist. Dadurch, daß die Pneumatikzylinder des Spannelementes und/oder der Verriegelungselemente entgegen der Wirkungsrichtung der pneumatisch aufgebrachten Kraft federbelastet sind, ist gewährleistet, daß bei einem durch eine Betriebsstörung bedingten Druckabfall im Pneumatiksystem die erfindungsgemäße Kupplung gelöst wird, so daß der Tankvorgang abgeschlossen werden kann und das Kraftfahrzeug weiter bewegt werden kann.

Eine vorteilhafte Lagerung und Ausgestaltung der Verriegelungselemente wird dadurch erreicht, daß die Verriegelungselemente schwenkbar gelagert sind und von den zugeordneten Pneumatikzylindern über eine Anlaufseite gegen Federkraft betätigbar sind. Hierdurch sind die Verriegelungselemente im geöffneten Zustand unabhängig von den Pneumatikzylindern betätigbar, wodurch eine Beschädigung dieser Pneumatikzylinder bei Fehlbedienungen verhindert wird.

Ein einfacher Aufbau und eine einfache pneumatische Steuerung ist gemäß einer weiteren Ausgestaltung der erfindungsgemäßen Kupplung dadurch sichergestellt, daß das Spannelement und die Verriegelungselemente jeweils einen Pneumatikzylinder aufweisen, die Pneumatikzylinder der Verriegelungselemente mit einem Druckluftspeicher strömungsverbunden sind und daß der Pneumatikzylinder des Spannelementes mit mindestens einem Pneumatikzylinder eines Verriegelungselementes über eine Drosselstelle strömungsverbunden ist. Diese Weiterbildung führt dazu, daß bei anliegendem Druck aus einem Druckluftspeicher zunächst die Pneumatikzylinder die Verriegelungselemente in Verriegelungsposition bringen und anschließend, da die Druckluft durch die Drosselbohrung langsamer in den Druckraum des Pneumatikzylinders des Spannelementes strömt, dieser nach der Verriegelung die benötigte Spannkraft aufbringt. Bei dieser Ausgestaltung ist also eine Steuerung der Kupplung über ein zentrales Druckventil mit nur einer Druckluftversorgungsleitung möglich.

Ein konstruktiv besonders einfacher Aufbau der erfindungsgemäßen Kupplung zum Verbinden vakuumisolierter Leitungen ist dadurch gewährleistet, daß der Grundkörper der Verriegelungsvorrichtung becherförmig ausgestaltet ist, die Pneumatikzylinder der Verriegelungselemente in einem an der Innenfläche des Grundkörpers angeordneten Ring angeordnet sind und der Kolben des Pneumatikzylinders des Spannelementes ein L-förmiges Profil aufweist, wobei das der Innenfläche des Grundkörpers zugewandte Ende des L-förmigen Kolbens gegenüber der Innenfläche abgedichtet ist und der parallel zur Innenfläche des Grundkörpers verlaufende Schenkel des L-förmigen Kolbens gegenüber der Innenfläche des Rings abgedichtet ist. Diese Ausgestaltung ermöglicht zum einen eine einfache Abdichtung der pneumatisch wirksamen Bauteile gegenüber der Umgebung und problemlos die Möglichkeit, die Pneumatikzylinder der Verriegelungselemente mit dem Pneumatikzylinder des Spannelementes über eine Drosselstelle zu verbinden.

Schließlich ist es von besonderem Vorteil, wenn neben den Verriegelungselementen und dem Spannelement auch die in der Kupplungsdose und dem Kupplungsstecker angeordneten Verschlußmittel pneumatisch betätigbar sind. Hierdurch ergibt sich die Möglichkeit der Verwendung eines pneumatischen Systems sowohl zur Verriegelung der Leitungsenden als auch zur Öffnung der die Leitungsenden verschließenden Verschlußmittel. Die Anordnung und Funktionsweise der Verschlußmittel entspricht dabei vorzugsweise der in den 197 27 652.0-24 und 197 27 655.5-24 beschriebenen.

Es gibt nun eine Vielzahl von Möglichkeiten die erfindungsgemäße Kupplung zum Verbinden vakuumisolierter Leitungsenden auszugestalten und weiterzubilden. Hierzu wird beispielsweise verwiesen auf die dem Patentanspruch 1 nachgeordneten Patentansprüche und die Beschreibung eines bevorzugten Ausführungsbeispiels der erfindungsgemäßen Kupplung zum Verbinden vakuumisolierter Leitungsenden in Verbindung mit der Zeichnung. In der Zeichnung zeigen
- Fig. 1: ein Ausführungsbeispiel einer erfindungsgemäßen Kupplung zum Verbinden vakuumisolierter Leitungsenden im Längsschnitt sowohl im verriegelten als auch im entriegelten Zustand und
- Fig. 2: eine Ansicht der Kupplungsdose aus der Richtung, aus der der Kupplungsstecker in die Kupplungsdose eingesteckt wird.

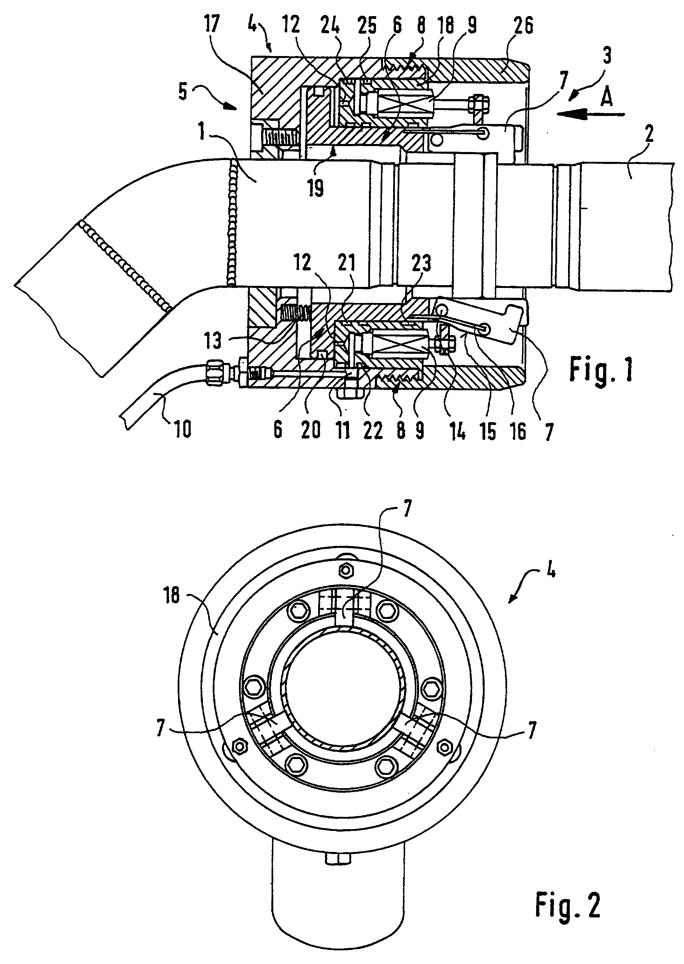

Das in Fig. 1 dargestellte Ausführungsbeispiel einer erfindungsgemäßen Kupplung zum Verbinden vakuumisolierter Leitungsenden 1, 2 weist eine Kupplungsdose 3, einen Kupplungsstecker 4 und eine Verriegelungsvorrichtung 5 auf. Dabei sind die Kupplungsdose 3 und der Kupplungsstecker 4 zum Führen eines kryogenen Mediums vorgesehen. Hierzu ist, in der Zeichnung nicht dargestellt, in jedem Leitungsende eine sich nahezu über die gesamte Länge von Kupplungsdose 3 und Kupplungsstecker 4 erstreckende, isolierende Vakuumkammer vorgesehen, die ein Verdampfen beim Durchfluß von tiefkalten Medien in den Leitungsenden 1, 2 verhindert. Erfindungsgemäß weist bei dem dargestellten Ausführungsbeispiel die Verriegelungsvorrichtung 5 sowohl ein pneumatisch betätigtes in axialer Richtung wirkendes Spannelement 6 als auch pneumatisch betätigte Verriegelungselemente 7 auf.

In Fig. 1 ist in der oberen Hälfte die erfindungsgemäße Kupplung zum Verbinden vakuumisolierter Leitungsenden im verriegelten und vorgespannten Zustand dargestellt. In der unteren Hälfte hingegen ist in Fig. 1 ein entriegeltes Verriegelungselement 7 und ein entspanntes Spannelement 6 dargestellt.

Das Spannelement 6 und die Verriegelungselemente 7 des in Fig. 1 dargestellten Ausführungsbeispiels weisen jeweils einen Pneumatikzylinder 8, 9 auf, wobei die Pneumatikzylinder 9 der Verriegelungselemente 7 mit einem nicht dargestellten Druckluftspeicher über eine Druckluftleitung 10 und einen Ringkanal 11 verbunden sind, während der Pneumatikzylinder 8 des Spannelementes 6 mit den Pneumatikzylindem 9 der Verriegelungselemente 7 über jeweils eine Drosselstelle 12 strömungsverbunden ist. Diese Konstruktion stellt sicher, daß die Druckluft aus dem nicht dargestellten Druckluftspeicher zunächst die Pneumatikzylinder 9 der Verriegelungselemente 7 betätigt - somit die Verriegelung der Leitungsenden sicherstellt - und anschließend über die Drosselstellen 12 in den Pneumatikzylinder 8 des Spannelementes 6 einströmt und somit die Spannkraft zum abdichtenden Anliegen der Leitungsenden 1, 2 aneinander zur Verfügung stellt. Bei dieser Konstruktion ist die funktionsgerechte zeitliche Abfolge des Verriegelns und anschließenden Unter-Spannung-Setzens durch die Öffnung eines Druckluftventils in der Verbindung zum nicht dargestellten Druckluftspeicher gewährleistet.

In Fig. 1 ist für den Pneumatikzylinder 8 des Spannelementes 6 dargestellt, daß dieser entgegen der Wirkungsrichtung der pneumatisch aufgebrachten Kraft über eine Feder 13 federbelastet ist, um die Rückstellung im drucklosen Zustand des Pneumatikzylinders 8 zu gewährleisten.

Aus Fig. 1 ist weiter ersichtlich, daß die Verriegelungselemente 7 auf einer Welle 14 schwenkbar gelagert sind und von den zugeordneten Pneumatikzylindem 9 über eine Anlaufseite 15 gegen die Federkraft einer Feder 16 betätigbar sind.

Bei dem dargestellten Ausführungsbeispiel einer Kupplung ist der Grundkörper 17 der Verriegelungsvorrichtung 5 fächerförmig ausgestaltet, wobei im Boden des Grundkörpers 17 eine Öffnung vorgesehen ist, in der das Leitungsende 1 über Schweißverbindungen befestigt ist. Die Pneumatikzylinder 9 der Verriegelungselemente 7 sind in einem an der Innenfläche des Grundkörpers 17 angeordneten Ring 18 angeordnet. Der Kolben 19 des Pneumatikzylinders 8 des Spannelementes 6 weist ein L-förmiges Profil auf, wobei das der Innenfläche des Grundkörpers 17 zugewandte Ende des L-förmigen Kolbens 19 gegenüber der Innenfläche des Grundkörpers 17 über eine Dichtung 20 abgedichtet ist. Weiter ist der parallel zur Innenfläche des Grundkörpers 17 verlaufende Schenkel des L-förmigen Kolbens 19 gegenüber der Innenfläche des Rings 18 über Dichtungen 21, 22, 23 abgedichtet. Auch die Außenfläche des Rings 18 ist gegenüber dem Grundkörper 12 über zwei Dichtungen 24, 25 abgedichtet. Die Dichtungen 20 bis 25 stellen sicher, daß aus den Pneumatikzylindern 8, 9 des Spannelementes 6 und der Verriegelungselemente 7 keine Druckluft in die Umgebung des Ausführungsbeispiels der erfindungsgemäßen Kupplung austreten kann.

Die in Fig. 2 dargestellte Ansicht der Kupplungsdose 3 zeigt aus der Richtung, aus der der Kupplungsstecker 4 in die Kupplungsdose 3 eingesteckt wird, die Verriegelungselemente 7 und den Ring 18 als auch das Ende des parallel zur Innenfläche des Grundkörpers 17 verlaufenden Schenkels des L-förmigen Kolbens 19. Darüber hinaus ist in Fig. 2 noch ein auf den Grundkörper 17 aufgeschraubter Schutzzylinder 26 sichtbar.

## Patentansprüche

1. Kupplung zum Verbinden vakuumisolierter Leitungsenden (1, 2) mit einer Kupplungsdose (3), einem Kupplungsstecker (4) und einer Verriegelungsvorrichtung (5) mit mindestens ein pneumatisch betätigtes, in axialer Richtung wirkendes Spannelement (6), wobei die Kupplungsdose (3) und der Kupplungsstecker (4) zum Führen eines kryogenen Mediums vorgesehen sind,
**dadurch gekennzeichnet, daß** die Verriegelungsvorrichtung (5) mit pneumatisch betätigtes Verriegelungselementen (7) ausgebildet ist, wobei das Spannelement (6) und die Verriegelungselemente (7) jeweils einen Pneumatikzylinder (8, 9) aufweisen, wobei die Pneumatikzylinder (9) mit einem Druckluftspeicher strömungsverbunden sind und der Pneumatikzylinder (8) mit mindestens einem Pneumatikzylinder (9) eines Verriegelungselementes (7) über eine Drosselstelle (12) strömungsverbunden ist.

2. Kupplung nach Anspruch 1,
**dadurch gekennzeichnet,**
**daß** die Pneumatikzylinder (8, 9) des Spannelementes (6) und/oder der Verriegelungselemente (7) entgegen der Wirkungsrichtung der pneumatisch aufgebrachten Kraft federbelastet sind.

3. Kupplung nach Anspruch 1 oder 2,
**dadurch gekennzeichnet,**
**daß** die Verriegelungselemente (7) schwenkbar gelagert sind und von den zugeordneten Pneumatikzylindern (9) über eine Anlaufseite (15) gegen Federkraft betätigbar sind.

4. Kupplung nach Anspruch 3,
**dadurch gekennzeichnet,**
**daß** der Grundkörper (17) der Verriegelungsvorrichtung (7) becherförmig ausgestaltet ist, die Pneumatikzylinder (9) der Verriegelungselemente (7) in einem an der Innenfläche des Grundkörpers (17) angeordneten Ring (18) angeordnet sind und der Kolben (19) des Pneumatikzylinders (8) des Spannelementes (6) ein L-förmiges Profil aufweist, wobei das der Innenfläche des Grundkörpers (17) zugewandte Ende des L-förmigen Kolbens (19) gegenüber der Innenfläche abgedichtet ist und der parallel zur Innenfläche des Grundkörpers (17) verlaufende Schenkel des L-förmigen Kolbens (19) gegenüber der Innenfläche des Rings (189) abgedichtet ist.

5. Kupplung nach einem der Ansprüche 1 bis 4,
**dadurch gekennzeichnet,**
**daß** die in der Kupplungsdose (3) und dem Kupplungsstecker (4) angeordneten Verschlußmittel pneumatisch betätigbar sind.

## Claims

1. Coupling for connecting vacuum-insulated line ends (1, 2) having a coupling socket (3), a coupling plug (4) and a locking device (5) having at least one pneumatically actuated clamping element (6) acting in the axial direction, the coupling socket (3) and the coupling plug (4) being provided for conveying a cryogenic medium, **characterized in that** the locking device (5) is designed with pneumatically actuated locking elements (7), the clamping element (6) and the locking elements (7) each having a pneumatic cylinder (8, 9), the pneumatic cylinders (9) being in fluidic connection with a compressed-air store, and the pneumatic cylinder (8) being in fluidic connection with at least one pneumatic cylinder (9) of a locking element (7) via a restricting point (12).

2. Coupling according to Claim 1, **characterized in that** the pneumatic cylinders (8, 9) of the clamping element (6) and/or of the locking elements (7) are spring-loaded counter to the direction of action of the pneumatically applied force.

3. Coupling according to Claim 1 or 2, **characterized in that** the locking elements (7) are mounted pivotably and can be actuated counter to spring force via a run-on side (15) by the associated pneumatic cylinders (9).

4. Coupling according to Claim 3, **characterized in that** the main body (17) of the locking device (7) is of cup-shaped design, the pneumatic cylinders (9) of the locking elements (7) are arranged in a ring (18) arranged on the inner surface of the main body (17), and the piston (19) of the pneumatic cylinder (8) of the clamping element (6) has an L-shaped profile, that end of the L-shaped piston (19) which faces the inner surface of the main body (17) being sealed with respect to the inner surface, and that limb of the L-shaped piston (19) which runs parallel to the inner surface of the main body (17) being sealed with respect to the inner surface of the ring (189) [sic].

5. Coupling according to one of Claims 1 to 4, **characterized in that** the closing means arranged in the coupling socket (3) and the coupling plug (4) can be actuated pneumatically.

## Revendications

1. Raccord pour la connexion d'extrémités de tuyaux (1, 2) calorifugés à vide comprenant un manchon de connexion (3), un connecteur (4) et un dispositif de verrouillage (5) avec au moins un élément de tension (6) à commande pneumatique, agissant dans la direction axiale,
le manchon de connexion (3) et le connecteur (4) étant destinés au passage d'un fluide cryogène,
**caractérisé en ce que**
le dispositif de verrouillage (5) comporte des éléments de verrouillage (7) à commande pneumatique, l'élément de tension (6) et les éléments de verrouillage (7) comportant chacun un vérin pneumatique (8, 9),
le vérin pneumatique (9) communiquant avec un accumulateur d'air comprimé alors que le vérin pneumatique (8) communique avec au moins un vérin pneumatique (9) d'un élément de verrouillage (7) par un point d'étranglement (12).

2. Raccord selon la revendication 1,
**caractérisé en ce que**
les vérins pneumatiques (8, 9) de l'élément de tension (6) et/ou des éléments de verrouillage (7) sont chargés par ressort contre la direction d'action de la force pneumatique.

3. Raccord selon l'une quelconque des revendications 1 ou 2,
**caractérisé en ce que**
les éléments de verrouillage (7) sont montés pivotants et peuvent être actionnés par les vérins pneumatiques (9), associés, par l'intermédiaire d'un côté d'attaque (15) contre la force de ressort.

4. Raccord selon la revendication 3,
**caractérisé en ce que**
le corps de base (17) du dispositif de verrouillage (7) est en forme de gobelet, les vérins pneumatiques (9) des éléments de verrouillage (7) sont installés dans un anneau (18) prévu au niveau de la surface intérieure du corps de base (17) et le piston (19) du vérin pneumatique (8) de l'élément de tension (6) a une section en forme de L,
l'extrémité du piston en forme de L (19), tournée vers la surface intérieure du corps de base (17), est rendue étanche par rapport à cette surface intérieure et la branche du piston (19) en forme de L, parallèle à la surface intérieure du corps de base (17) est rendue étanche par rapport à la surface intérieure de l'anneau (18).

5. Raccord selon l'une quelconque des revendications 1 à 4,
**caractérisé en ce que**
les moyens de fermeture associés au manchon de connexion (3) et au connecteur (4) sont actionnés de manière pneumatique.
